# EUROPEAN PATENT APPLICATION

(11) **EP 1 752 657 A1**
(43) Date of publication of application: **14.02.2007**
(21) Application number: 05706625.0
(22) Date of filing: 08.02.2005
(51) Int. Cl.: F03B 3/12, F03B 13/16

(54) **A VERTICAL BLADE WATERWHEEL POWER GENERATOR AND METHOD OF WATERPOWER THEREOF**

(30) Priority: 16.03.2004 CN 200410030315
(71) Applicant: Lei, Yuening, Muyun Xiang, Fuan Fujian 355002 (CN); Lei, Shengqing, Muyun Xiang, Fuan Fujian 355002 (CN)
(72) Inventor: Lei, Yuening, Muyun Xiang, Fuan Fujian 355002 (CN); Lei, Shengqing, Muyun Xiang, Fuan Fujian 355002 (CN)
(74) Representative: Marchitelli, Mauro
(86) International application number: PCT/CN2005/000188
(87) International publication number: WO 2005/088118

(57) **Abstract**

The invention discloses a vertical blade waterwheel power generator and method of waterpower generation. The generator includes a vertical blade waterwheel (17) having multi-blade (a1), each blade (a1) rotates synchronously with a center shaft of the waterwheel (25); dock posts (20) for fixing the waterwheel (17); speed-up gear means (14) rotating synchronously with the center shaft of the waterwheel (25); and generators (dl), which can realize electric power generation by means of transferring the energy to the power generators using the speed-up gear means, **characterized in that** the blades (a1) are fired on the waterwheel (17) along vertical direction which perpendicular to the horizontal. The blades (a1) are driven by the water and kept to perpendicular to the horizontal all the time. The vertical blad5 waterwheel power generator transforms potential energy into electric energy, then the electric energy is transferred to a regulating electric output implement. When voltage is too high, the redundant electric energy is to be transformed into mechanic energy by the motor and the mechanic energy will be stored into a energy storage apparatus (2) through a regulating implement (10), clutch assembly (9), transmission (7), transmission gear means and transmission system. When wave energy or the voltage is instable, the mechanic energy stored in the energy storage apparatus is transferred to the generator through the transmission gear means; then the kinetic energy is transformed into electric energy by the generator; finally, even voltage is provided by complementary of the regulating electric output implement.

## Description

### Cross Reference to Related Application

The present application claims the priority of the China patent application No. 200410030315.7 filed on March 16, 2004 by the same applicant, which was incorporated herein by reference.

### Technical Field

The present invention relates to a water turbine generator, more particularly a water turbine generator with vertical turbine blades which rotate in such a way that they are constantly kept vertical to the horizontal plane, and a method of hydraulic power generation utilizing such water turbine generator with vertical turbine blades.

### Background Technology

At present the social productive force is fast growing, the electric power is widely used, and the power consumption in people's life is progressively increasing, which leads to the fear the limited power resources are severely consumed and may be exhausted. According to the information concerning power resource, 90 % of the electric power in the global world is generated by means of thermal, nuclear, petroleum, and natural gas electric power generation, thus resulting in a heavy pollution of the global environment and a threaten to the living of human being.

Typically, the existing hydraulic power generators utilize water turbines or floating pontoons as the rotating power generating units, such as those described in the China patent publication CN1417467A titled " Ocean Wave Power Generation System", which was filed by Changxian LI on April 10, 2001. In such hydraulic power generators, there is a need to construct barriers to increase the water level. Further, a pumped-storage technology is often used to store the superfluous electric power, that is, water is pumped from the downstream reservoir to the upstream reservoir, so that water may be released from the upstream reservoir to generate electric power when the need for electric power is high, so as to meet the need for high power supply. In such an engineering to build reservoirs, there are disadvantages of resulting in excessive occupation of lands and lacking of flexibility.

### Summary of the Invention

The present invention aims to develop regenerative clean electric power, so as to meet human being's increasing need for energy, protect the limited resources and the environment, accelerate the development of economy, and benefit human being. The generator according to the invention is adjustable in size and low in cost, gains payback quickly, and is solid, durable and safe. It is adapted to areas near the oceans or rivers, and is notable in economic profit.

The water turbine generator with vertical turbine blades according to the invention can eliminate the disadvantages of the prior art, namely there is no need to construct barriers to increase the water level. The generator can be built up wherever there is water flow. It stores the superfluous electric power by making use of the mechanical energy conversion principle, and releases the stored energy to generate electric power when the need for electric power is high, so as to meet the need for high electric power supply. Therefore, the generator according to the invention can be constructed in a very simple engineering, put into production fast, and adapted to exploit the seawater resources.

There are four arrangements of different structures for the generator according to the present invention, which may be selected freely. The first structure is a single water turbine generator, wherein posts are arranged according to the specification of the water turbine, two ends of the rotating center shaft of the water turbine are mounted on the posts, and a speed-up gear and a generator group are installed, thus achieving electricity generation in very simple implementation. The second structure is a combined generator comprising more than two water turbine generators with vertical turbine blades described above, wherein these water turbines may be combined to generate electricity integrally, and they may be connected freely by the posts. The third structure is a generator employing floating pontoons to support the water turbines, the pontoons for each water turbine are supported by stands, and thus the water turbines are connected serially like a flood prevention dam. The fourth structure employs a combined post apparatus to support the generators of each water turbine, and the water turbine may ascend or descend with the water level.

The innovation in the above four structures is as follows. Polygonal inner frame and outer frame are respectively provided on the left and right of the water turbine, the inner frame is the main frame for mounting the reinforcing shafts of the turbine blades at the vertexes of the polygon, the outer frame is the auxiliary frame and has bent shafts at the vertexes of the polygon for connecting with the reinforcing shafts of the turbine blades, so that the turbine blades are constantly vertical to the horizontal plane when rotating. The water turbine is flexible and solid, and rotates with the arising and falling of the water level, thus can reduce the consumption of wave power, convert the impact force of the flowing water (wave power) into kinetic energy, and transmit the kinetic energy to the generator group to generate electricity. During the generation of electric power, if the voltage is too high, part of the electric power is converted into kinetic energy by the electric motors, and the kinetic energy is transmitted to the energy storage bank via a shift, a clutch assembly, and a transmission, and is converted into potential energy and is stored therein. When the ocean power is not stable or the hydraulic power is insufficient, the potential energy is converted into electric power to keep the voltage stable. Such an apparatus, which converts excessive electric power into potential energy and subsequently converts the potential energy into electric power, as describe above, cannot be found in the existing electric power generation systems.

The invention provides a water turbine generator with vertical turbine blades, comprising: a water turbine with vertical turbine blades, having multiple blades each of which may rotate synchronously with a center shaft of the water turbine; posts for fixing the water turbine in water; speed-up gear train rotating synchronously with the center shaft of the water turbine; and a generator group, which can realize hydraulic power generation by means of kinetic power transmitted to the generator group through the speed-up gear train, which is characterized in that, the multiple blades are fitted on the water turbine vertically to the horizontal plane, so that the respective blades are driven by water and kept vertical to the horizontal plane all the time.

Further, at the middle part of each turbine blade there is integrally provided with a reinforcing shaft parallel with the center shaft; on the left and right sides of the water turbine there are respectively provided with an inner frame and an outer frame, each of which is a polygonal frame having the same number of sides as the number of turbine blades, wherein, the inner frame has multiple connecting arms, each of which is orderly connected to the end of one corresponding reinforcing shaft at the vertex of the polygon, so that the inner frame may rotate about the axis of the center shaft ; the outer frame has a circular rail at its center portion, and multiple bent shafts, which are provided at the vertexes of the polygon and connected with the ends of corresponding reinforcing shafts of the turbine blades to be integral with the corresponding reinforcing shafts, so that the outer frame may rotate about the center axis of the circular rail ; the rotating center axis of the outer frame is located below the rotating center axis of the inner frame , and these two rotating center axes are parallel with each other and positioned in the same vertical plane.

In the water turbine generator with vertical turbine blades described above, each of the turbine blades of the water turbine comprises a plurality of sawtooth-shaped units in the shape of strips, which are arranged along the extending direction of the center shaft of the water turbine and form a rectangle as a whole, the adjacent sawtooth-shaped units are fixed to each other through separation plates, and are formed as a pattern that concave portions and convex portions are alternately arranged along the direction of the center shaft of the water turbine.

In the water turbine generator with vertical turbine blades described above, the bent shafts are L-shaped and taper from upper portion to lower portion, each of the bent shafts is respectively mounted to two ends of the reinforcing shaft of the corresponding turbine blade, both ends of the reinforcing shaft are in three stepped sections decreasing in diameter gradually, the inner section is cylindrical to mount a bearing for connecting the inner frame, the middle section is a hexagonal prism to mount the bent shaft , which is used for connecting with the outer frame and is provided at its both ends with a hexagonal hole for cooperating with the middle section of the reinforcing shaft of the turbine blade, and the outer section is installed with a screw for locking the bent shaft , each end of the bent shaft has a hexagonal hole for aligning with the hexagonal prism middle section of the corresponding reinforcing shaft of the turbine blade , so as to be fixed thereon.

In the water turbine generator with vertical turbine blades described above, one water turbine has 5-10 turbine blades.

In the water turbine generator with vertical turbine blades described above, the reinforcing shaft of the turbine blade is a circular pipe, and along the width direction of the blade, the thickness of the pipe is incremented in steps every unit from the middle part of the reinforcing shaft to its left or right, and each unit and separation plate are fixed together by welding.

In the water turbine generator with vertical turbine blades described above, the water turbine is provided at its both sides with boat-shaped floating pontoons, a plurality of stands for supporting the floating pontoons and reinforcing frames arranged at the side of the floating pontoons, wherein the stands are connected with the posts through fasteners, the boat-shaped floating pontoons are made by welding flat plates, the upper and lower ends of the floating pontoons are wedge-shaped, and the floating pontoons are located at the outside of the outer frame; at the upper portion of the reinforcing frame there is a recess, which supports the center shaft of the water turbine through a bearing; and in positions corresponding to the inner periphery of the circular rail a plurality of pulleys are installed with a certain interval between each other, and the circular rail of the outer frame is supported by a circular groove located at the outer periphery of these pulleys.

In the water turbine generator with vertical turbine blades described above, the generator further comprises a joined post apparatus, at both sides of the water turbine there are respectively provided with a plurality of standing joined posts, upper cross beams and lower cross beams connecting the joined posts, two screw bolts installed between the upper and lower cross beams via bearings, and a reinforcing frame installed at one side of the screw bolt, wherein, a plurality of nuts are nested on the screw bolts, and the reinforcing frame are fixed with the nuts integrally, at the upper portion of the reinforcing frame there is a recess, which supports the center shaft of the water turbine through a bearing, and in positions corresponding to the inner periphery of the circular rail a plurality of pulleys are installed with a certain interval between each other, and the circular rail of the outer frame is supported by a circular groove located at the outer periphery of these pulleys.

In the water turbine generator with vertical turbine blades described above, the joined post apparatus further comprises a clutch gear train, a floating ball coaxial with the clutch gear train, a bevel gear train and gear trains, the bevel gear train is mounted to a single splined shaft in such a way that the top surfaces of two bevel gears face with other and a spur gear is sandwiched between them, and through the splined shaft, the bevel gear train is connected with a bevel gear train mounted on the upper cross beam; and the floating ball ascends or descends with the water level, so that the clutch gear train is engaged with corresponding gears in the bevel gear train and the gear train to drive two screw bolts to rotate, thus achieving the automatic ascending and descending of the reinforcing frame with the water level.

In the water turbine generator with vertical turbine blades described above, the generator is further provided with a shift, a clutch assembly, a transmission, a transmitting gear train and an energy storage bank; wherein, the shift may comprise a gear rack, which is movable up and down to determine speed up or speed down; the clutch assembly is used to determine the shifting position of the transmission, and comprises an upper ring gear engaged with the gear rack, a middle transmitting member and a lower worm; along its circumferential direction, the transmission is provided with multiple independent transmission cabins, each of which contains multiple gears and is provided with a main gear at its upper portion and lower portion respectively, and these main gears may selectively engage with the top gear and bottom gear within respective transmission cabin; the transmitting gear train has a large gear interlocked with the main gear at the lower portion, and multiple spur gears that are disposed along the circumference of the large gear and may transmit power into or out of the energy storage bank; the energy storage bank comprises a housing coaxial with the center shaft of the large gear and leaf springs, one end of each leaf spring is mounted in an annular housing of an annular disc and the other end is fixed to the shaft hub of the center shaft of the large gear, and the leaf spring may wind or unwind about the center shaft; when the voltage is high, part of the electric power is transmitted to the electric motor and converted into kinetic energy there, the kinetic energy is transmitted to the shift via the gear train , the shift controls the clutch assembly to engage the transmission and select one appropriate corresponding transmission cabin of the transmission to make gear shift, and the kinetic energy is converted into potential energy via the transmitting gear train and stored into the energy storage bank; when the voltage is low, the potential energy from the energy storage bank is converted into kinetic energy, and the kinetic energy is transmitted to an energy regulation and control device via the center shaft of the energy storage bank, the output gear train and the gear train, and ultimately transmitted to the electric generator and converted into electric power there, and the electric power is supplied to an electric regulation and output device to achieve a stable voltage output.

In the water turbine generator with vertical turbine blades described above, the middle transmitting member is provided with a guide disc connected with the upper ring gear, and a transmitting gear train which is able to selectively engaged with the lower worm ; in the guide disc there are provided with pressure-limiting spring colliding balls, which guide the transmitting gear train to disengage from the lower worm when the rotation power exceeds its threshold for pressure limiting, so as to automatically shift through mechanical transmission.

In the water turbine generator with vertical turbine blades described above, the transmission is in spherical shape and comprises a top annular worm wheel, a plurality of transmission cabins, a center shaft interlocked with the worm wheel, and main frame plates as well as auxiliary frame plates both of which are used to separate respective transmission cabins from each other, the main frame plates are fixedly connected with the top annular worm wheel, and a plurality of gears in the same vertical plane and engaged with each other are installed in each transmission cabin from top to bottom sequentially.

In the water turbine generator with vertical turbine blades described above, depending on the sequence that respective transmission cabin are arranged, the speed transmitted by the transmission increase in steps from the cabin at intermediate position to left and decrease in steps from the cabin at intermediate position to right.

In the water turbine generator with vertical turbine blades described above, the transmitting gear train is composed of a large gear, a small gear interlocked with the center shaft of the large gear, and four spur gears engaged with the small gear, wherein the spur gears have outer shaft, and small gears are mounted at the middle part of the outer shafts for engaging gears arranged at the outer periphery of the energy storage bank, thus inputting the rotating power into the energy storage bank and converting it into potential energy therein; the transmitting gear train further comprises a large gear interlocked with the center shaft of the large gear, and gears interlocked with the outer shafts of the spur gears, for outputting the energy from the energy storage bank.

In the water turbine generator with vertical turbine blades described above, the energy storage bank further comprises a housing, an upper and a lower cover plate and multiple layers of annular discs, wherein a plurality of splined hubs are fitted on the center shaft, splined grooves are formed at the periphery of the housing, projections and recesses being able to mate with the splined grooves are provided along the periphery of the annular discs, an embedding circular plate is mounted at the bottom annular surface of each layer of annular discs, the leaf springs are installed in each layer of the annular discs , one end of each leaf spring is mounted in the inner recess of the annular discs, the other end is fixed to the splined hub, at the lower side of the upper cover plate and the upper side of the lower cover plate there is respectively provided with a annular channel for containing balls, at the upper and lower surfaces of the annular channels there are respectively provided with annular plates for locking the balls, and when the housing and the annular disc as well as the center shaft rotate integrally, the leaf springs wind or unwind about the center shaft.

The invention further provides a combined generator, comprising more than two water turbine generator with vertical turbine blades described above, these water turbine generators may be combined to generate electricity integrally.

The invention further provides a method of hydraulic power generation utilizing the water turbine generator with vertical turbine blades described above, comprising the following steps:
a. the water turbine with multiple turbine blades is driven by flowing water, so that the blades drive the center shaft of the water turbine to rotate in such a manner that all the blades are vertical to the horizontal plane;
b. the center shaft of the water turbine is connected with the speed-up gear train and transmits kinetic energy to a generator group via the gear train;
c. the kinetic energy is converted into electric power by the generator group, thus providing a continuous and stable voltage through a voltage regulation and output device.

In the method of hydraulic power generation described above, more than two water turbine generators with vertical turbine blades are combined to generate electricity.

The invention further provides a method of hydraulic power generation applying the water turbine generator with vertical turbine blades described above to ocean power generation, the method comprising the following steps:
a. the water turbine with multiple turbine blades is driven by flowing water, so that the blades drive the center shaft of the water turbine to rotate in such a manner that all the blades are vertical to the horizontal plane;
b. the center shaft of the water turbine is connected with the speed-up gear train and transmits kinetic energy to a generator group via the gear train;
c. the kinetic energy is converted into electric power by the generator group; when the voltage is high, the electric power is converted into kinetic energy by the electric motor, and the kinetic energy is stored into the energy storage bank via the shift, the clutch assembly, the transmission, the transmitting gear train and the drive system; when the ocean power is not stable or the voltage is insufficient, the mechanical energy stored by the energy storage bank is transmitted to the generator group through the transmitting gear train, and is converted into electric power by the generator group; thus providing a stable voltage through a voltage regulation and output device.

In the method of hydraulic power generation described above, more than two water turbine generators with vertical turbine blades are combined to generate electricity.

The device according to the present invention may be adjusted in size, and is particularly adapted to ocean power generation. It can generate electricity of large power, and solves the conventional difficulties in ocean power exploitation, such as the arising and falling of water level, forward and backward tide, strong and weak flowing power of water. Its technical effects are listed below:
1. The turbine blades are kept vertical to the horizontal plane constantly, and thus immerse into water deeply, contact water with large area, and leave off water quickly.
2. A plurality of water turbines and floating pontoons may be connected in line to form a large combined water turbine generator, and its capacity may be set as needed.
3. Stands are employed to support each floating pontoon, and the stands are connected to the upstream and downstream posts via chains, thus the water turbines are securely fixed and can bear heavy impact during flooding tide and falling tide, and can float at specified water level.
4. Through the shift, clutch assembly, transmission, energy storage bank and etc., the electric power is converted into potential energy by mechanical structure and is stored. When needed, the stored potential energy is released and converted into electric power for outputting, thus controlling the voltage to be stably output automatically.

### Brief Description of the Drawings

Figure 1 is the schematic view of an embodiment of the water turbine generator with vertical turbine blades according to the invention.
Figure 2 is the schematic view of a combined water turbine generator formed by connecting in line the water turbines shown in figure 1.
Figure 3 is the side view of the flat boat-shaped floating pontoon shown in figure 1.
Figure 4 is the schematic view of four connected inner frames A and outer frames B between two adjacent water turbines shown in figure 2.
Figure 5 is the schematic view showing the synchronous rotation of the inner frame A and outer frame B at one side of the water turbine shown in figure 1.
Figure 6 is the schematic view of the turbine blade and the bent shaft connected therewith shown in figure 1.
Figure 7 is the schematic view showing the construction principle of joined posts and various spare parts at one side of a joined post apparatus.
Figure 8 is the schematic view of the shift shown in figure 1,
Figure 9 is the schematic view of the clutch assembly shown in figure 1.
Figure 10 is the schematic view of the transmission shown in figure 1.
Figure 11 is the schematic top view of the transmitting gear train shown in figure 1.
Figure 12 is the schematic perspective view of the energy storage bank shown in figure 1.
Figure 13 is the inner annular disc in the energy storage bank shown in figure 12.

### Detailed Description of the Embodiments

A detailed description of the invention will be made below in connection with the drawings and the specific embodiments.

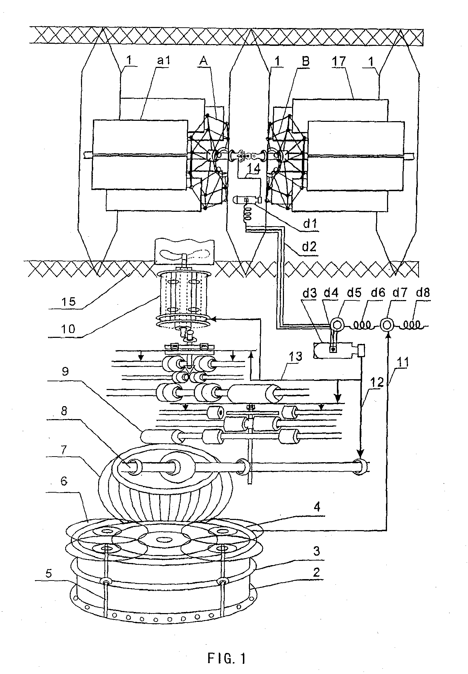

Figure 1 shows an embodiment of the water turbine generator with vertical turbine blades according to the invention, wherein floating pontoons supports the water turbine. Below description will be made with reference to the labels indicated in figures 1 to 13. The water turbine generator with vertical turbine blades comprises a water turbine with vertical blades 17 having multiple turbine blades a1, each of which may rotate with the center shaft 25 of the water turbine synchronously; speed-up gear train 14 that may rotate with the center shaft 25 of the water turbine; and a generator group d1. In the water turbine generator, the multiple turbine blades a1 are installed in the water turbine 17 vertically to the horizontal plane. At the middle of each turbine blade a1 there is integrally provided with a reinforcing shaft 35 parallel with the center shaft 25. On the left and right sides of the water turbine 17 there are respectively provided with inner frame A and outer frame B, each of which is a polygonal frame having the same number of sides as the number of turbine blades a1. The inner frame A has multiple connecting arms, each of which is connected to the end of one corresponding reinforcing shaft 35 at the corresponding vertex of the polygon, so that the inner frame A may rotate about the axis of the center shaft 25. The outer frame B has a circular rail 28 at its center portion, and multiple bent shafts 31, which are provided at the vertexes of the polygon and connected with the ends of corresponding reinforcing shafts 35 of the turbine blades to be integral therewith, so that the outer frame B may rotate about the center axis of the circular rail 28. The rotating center axis of the outer frame B is located below the rotating center axis of the inner frame A, and these two rotating center axes are parallel with each other and positioned in the same vertical plane. Therefore each of the turbine blades a1 is driven by flowing water and thus is kept vertical to the horizontal plane constantly.

The generator is further provided with a shift 10, a clutch assembly 9, a transmission 7, a transmitting gear train and an energy storage bank 2. The shift 10 may comprise a gear rack 60, which is movable up and down to determine speeding up or speeding down. The clutch assembly 9 is used to determine the shifting position of the transmission, and comprises an upper ring gear 61 engaged with the gear rack 60, a middle transmitting member and a lower worm h7. Along its circumferential direction, the transmission 7 is provided with multiple independent transmission cabins, each of which contains multiple gears and is provided with a main gear 67 at its upper portion and lower portion respectively, and these main gears 67 may selectively engage with the top gear and bottom gear within respective transmission cabin t3. The transmitting gear train has a large gear y1 interlocked with the main gear 67 at the lower portion, and multiple spur gears that are disposed along the circumference of the large gear y2 and may transmit power into or out of the energy storage bank 2. The energy storage bank 2 comprises leaf springs. One end of each leaf spring is fixed to the shaft hub of the center shaft 83 of the large gear y1, and the leaf spring may wind or unwind about the center shaft 83. When the voltage is high, on one hand, part of the electric power is transmitted via transmission line d4 to the electric motor d3, and is converted into kinetic energy there. The kinetic energy is transmitted to the shift 10 via the gear train 13 and the main axle 8, the shift 10 controls the clutch assembly 9 to engage the transmission 7 and select one appropriate corresponding transmission cabin t3 of the transmission 7 to make gear shift, and the kinetic energy is converted into potential energy via the transmitting gear train and stored into the energy storage bank 2. When the voltage is low, on the other hand, the potential energy from the energy storage bank 2 is converted into kinetic energy, and the kinetic energy is transmitted to an energy regulation and control device via the center shaft 83 of the energy storage bank 2, the output gear train 4 and the gear train 11, and ultimately transmitted to the electric generator. The kinetic energy is converted into electric power by the electric generator, and is supplied to an electric regulation and output device d7 to achieve a stable voltage.

The water turbine generator with vertical turbine blades further comprises a floating pontoon means located at both sides of the water turbine 17. The floating pontoon means is consisted of a stand 15 and a floating pontoon 1. The floating pontoon 1 has a boat-like shape with wedge-shaped upper and lower ends, and is constructed by welding flat plates. The stand 15 is connected with the posts 20 through fastening means, and supports the floating pontoon 1. The center shaft 25 of the water turbine 17 is fixed via bearings into a recess 24 of the reinforcing frame 22 at the outer front side of the floating pontoon 1.

The water turbine blades a1 are rotated by waterpower, and its kinetic energy is transmitted to the speed-up gear 14 via the center shaft 25 of the water turbine. The kinetic energy is further transmitted to the generator group d1 via a belt and pulley system, so as to be converted into electric power. The electric power is connected to a voltage-limiting distributor d5 via wire d2, and after limiting its voltage it is transmitted to the electric regulation and output device d7, so as to be output through the wire d8 and is interconnected with electric network. The electric regulation and output device d7 comprises electronic sensors, a voltage limiter, the transmission and etc to determine whether the output voltage is over high or insufficient. The electric regulation and output device d7 may prevent the energy storage bank 2 from releasing energy when the voltage is over high, and may activate the energy storage bank 2 to release energy when the voltage is insufficient.

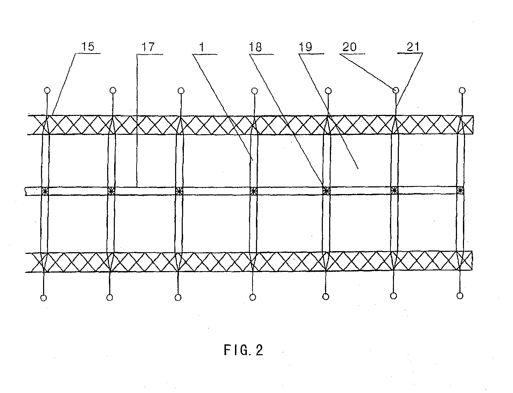

In the case of small water flow or slow rivers, a single water turbine generator may be employed, namely a single water turbine is installed in the middle space 19 between two floating pontoons 1, or the water turbine 17 may be fixed in the flowing water only with posts (see the indication 20 in figure 2) without floating pontoons. When there is a requirement for high electric load, two or more (up to more than 100) single water turbines may be coupled to generate electric, and the water turbines are supported by the combination of floating pontoons or connected posts. The projecting ends of the respective center shafts 25 are connected through cross axles (see the indication 18 in figure 2).

Figure 2 depicts that multiple water turbines 17 and floating pontoons 1 are alternately connected together and are arranged in line to form a combined water turbine generator. Ladder-shaped stands 15 support the wedge-shaped ends of respective floating pontoon 1, the connecting point for the end of the center shaft 25 of each water turbine is set at the middle of the flat surface of the corresponding floating pontoon 1. The center shafts 25 of two adjacent water turbines are connected by means of a cross axle 18, so that two to tens of water turbines 17 are sequentially connected in line to be integral with each other. The combined generator spans the water surface like a flood prevention dam, and thus may bear large impact of water flow. The combined water turbines are provided with posts 20 at the upstream and downstream sides of the ends of each floating pontoon 1. Chains 21 or cables fix the stands 15 and the posts 20 with each other, so that the respective water turbine may float freely in the flowing water. The combined water turbine generator may be arranged in the unidirectional flow of rivers, and is preferably arranged in the bi-directional flow of seawater with tide and ebb tide. By combining more than 2 single water turbine generators with vertical turbine blades, a combined water turbine generator may be constructed, to integrally generate electricity in a combined way.

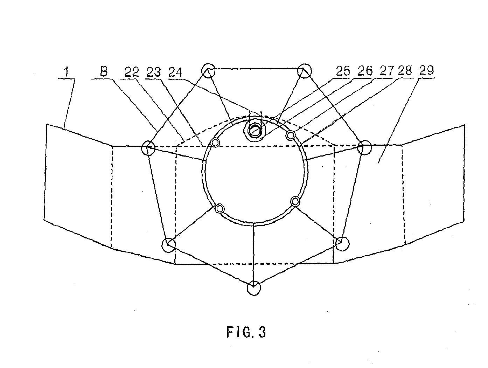

Figure 3 depicts the boat-shaped floating pontoon 1 with two wedge-shaped ends, which is a flat plate. The floating pontoon 1 as a whole is like a flat plate floating boat, so that the material constructing the floating pontoon 1 needs not to be bent or squeezed into proper shape. Instead, it may be constructed by welding flat panels together. The middle part of the floating pontoon 1 is a rectangular box, and its two ends have a shape of wedge. This shape is easy to achieve, and does not disturb the water flow, so that it serves to avoid disturbing water flow. The floating pontoon 1 installs the outer frame B of the water turbine at either one or both of side surfaces 29, and at the same time is provided with a reinforcing frame 22 to enhance its strength. At the upper portion of the reinforcing frame 22 there is a recess 24, which supports the center shaft 25 of the water turbine through a bearing 26. In positions corresponding to the inner periphery of the circular rail 28 a plurality of pulleys are installed with a certain interval between each other, and the circular rail 28 of the outer frame B is supported by a circular groove located at the outer periphery of these pulleys. The number of the pulleys 27 in the frame 22 may be arbitrary, as long as the outer frame B of the water turbine 17 may flexibly rotate. In the present embodiment, screws 30 are inserted through the bearing holes in the pulleys 27, so that four pulleys 27 are fitted to the reinforcing frame 22 along the inner periphery of the circular rail 28 with any two adjacent pulleys being separated from each other by 90 degrees, and support the polygonal outer frame B of the water turbine 17 to rotate. The speed-up gear 14 and the generator group d1 are installed on the upper flat surface 23 of the floating pontoon.

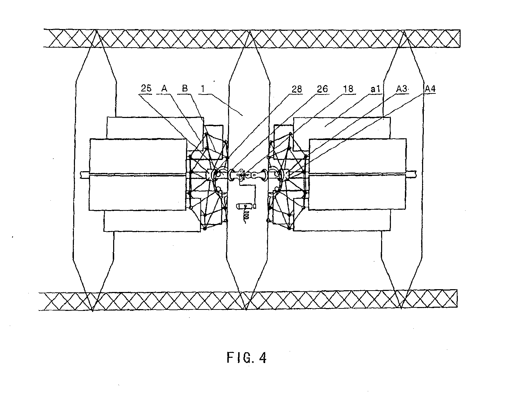

Figure 4 depicts a schematic view showing that four polygonal inner frames A and outer frames B between two water turbines 17 are rotating together in a combined manner. At the middle of each turbine blade a1 there is integrally provided with a reinforcing shaft 35 parallel with the center shaft 25. On the left and right sides of the water turbine 17 there are respectively provided with inner frame A and outer frame B, each of which is a polygonal frame having the same number of sides as the number of turbine blades a1. The shapes and sizes of the polygonal frames formed by the inner frame A and the outer frame B are the same. The inner frame A is directly fixed to the reinforcing shaft 35 of the turbine blade a1 of the water turbine 17, and the outer frame B is fitted to the outer side of the inner frame A. The inner frame A has a plurality of connecting arms, which are connected to the ends of the reinforcing shafts 35 sequentially at the corresponding vertexes of the polygon. The outer frame B is proved with a circular rail 28 at its center portion, and a plurality of bent shafts 31, which are arranged at the vertexes of the polygon and are fixed to the ends of the reinforcing shafts 35 of the turbine blades a1 to be integral therewith. The plurality of connecting arms and a plurality of connecting rods of the polygonal frames are all made from circular pipes, which are welded together to combine these polygonal frames. The plurality of connecting arms are nested via bearings A3 to ends of the reinforcing shafts 35 of the turbine blades a1 at the vertexes of the polygon, and at the respective vertexes A3 of the polygon the plurality of connecting rods are also fixed to the shaft hub A4 locating at the center of the inner frame A. The center shaft 25 of the water turbine 17 are inserted through the shaft hub A4, and its projecting two ends are installed, after fitted with bearings, in the upper recess 24 of the reinforcing frame 22 locating at the side of the floating pontoon 1. The width and length of each turbine blade a1 of the water turbine may be calculated out according to the depth of the water channel where the water turbine is to be installed, and the number of the turbine blades a1 and the distance between adjacent turbine blades a1 are preferably selected to ensure the turbine blades a1 would not collide with each other when the water turbine 17 rotates. The inner frame A serves as the main frame for mounting the reinforcing shaft 35 of the turbine blade a1 of the water turbine, while the outer frame B serves as auxiliary frame. Therefore it is ensured that the turbine blade a1 of the water turbine 17 may, while keeping vertical to the horizontal plane constantly, drive the center shaft 25 to rotate, and will not spin when bearing any magnitude of impact from water flow. The circular rail 28 of the outer frame B encircles the center shaft 25 of the water turbine 17 with clearance existing between them, in order to avoid interference when the water turbine 17 rotates.

In the case of utilizing the wave energy of mild rivers or brooks to generate electricity, there is no need to store or release energy, so a single or two or more than two water turbine generators with vertical turbine blades may be directly used to generate electricity. In the driving of flowing water, multiple vertical turbine blade a1 drive the center shaft 25 of the water turbine to rotate, the kinetic energy is transmitted to the generator group d1 via the speed-up gear train, and is converted into electric power by the generator group d1. The electric power is output through the wire d8 and is interconnected with electric network, thus providing power supply.

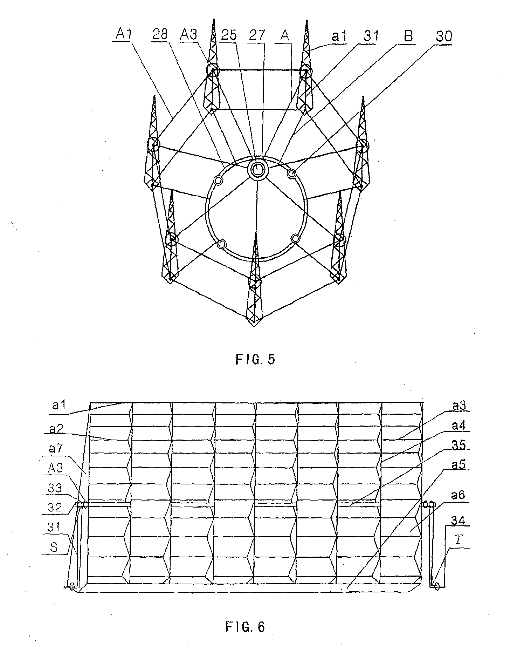

Figure 5 depicts the principle that the polygonal inner frame A and outer frame B on both sides of the water turbine 17 rotate synchronously. The inner frame A may rotate about the axis of the center shaft 25, and the outer frame B may rotate about the center axis of the circular rail 28. The rotating center axis of the outer frame B is located below the rotating center the rotating center axis of the inner frame A, and these two rotating center axes are parallel with each other and positioned in the same vertical plane. L-shaped bent shafts 31 are mounted at the vertexes of the polygon of the outer frame B, and the length of the vertical section of the L-shaped bent shafts 31 are the same as the vertical distance between the two rotating center. In the embodiment, the inner diameter of the circular rail 28 in the outer frame B is the product of a value within the range from 2.008 to 2.05 multiplying the sum of the vertical distance between the rotating centers of the inner frame A and outer frame B plus the diameter of the center shaft 25 of the water turbine 17, so as to ensure that there exists clearance between the circular rail 28 and the center shaft 25.

Figure 6 depicts a schematic view showing the construction of the turbine blade a1 and the connection between the bent shaft 31 and the turbine blade a1. Each of the turbine blades a1 of the water turbine 17 comprises a plurality of sawtooth-shaped units in the shape of strips, which are arranged along the extending direction of the center shaft of the water turbine and form a rectangle as a whole. The adjacent sawtooth-shaped units are fixed to each other through separation plates a4, and are formed as a pattern that their concave portions and convex portions are alternately arranged along the direction of the center shaft 25 of the water turbine. In the present embodiment, the ratio of the length of the turbine blade a1 in the vertical direction to the length of the connection arm A1 of the polygonal frame is 99.5%. The side a7 of the turbine blade a1 is A-shaped. The reinforcing shaft 35 of the turbine blade a1 is formed from circular pipes, and set at the lower portion of the turbine blade a1 and near the center of the turbine blade a1, separating the blade into two parts with a ratio of 52:48. The reinforcing shaft 35 is inserted through the middle of the side a7, and along the width direction of the blade a1 the thickness of the reinforcing shaft 35 is incremented every unit a6 in steps from the middle part of the reinforcing shaft 35 to its left or right. The reinforcing shaft 35 is welded to each unit and separation plate a4. The sawtooth-shaped units a6 are preferably bent over 130 ° to have a wave-like shape, and thus have a convex edge a3 and a concave edge a2. The convex edges a3 and concave edges a2 of adjacent sawtooth-shaped units a6 are alternately arranged.

When the turbine blade a1 is in development and production, the turbine blade a1 may be formed as a frame type. The turbine blade a1 of the water turbine 17 comprises sawtooth-shaped units a6 in the shape of strips. By welding multiple plates, a sawtooth-shaped unit a6 is formed, which is consisted of convex edges a3 and concave edges a2 connected sequentially from top to bottom. A plurality of sawtooth-shaped units a6 are arranged along the direction of the center shaft 25 of the water turbine and are formed to be a rectangular shape as a whole. Adjacent sawtooth-shaped units a6 are fixed together by separation plates a4, and form a pattern that concave portions and convex portion are alternately arranged along the direction of the center shaft 25 of the water turbine. The turbine blade a1 may be formed from plastic steel plate or other materials, and is provided with a reinforcing rod at its upper and lower portions a5 respectively. The number of the turbine blades a1 of the water turbine 17 may 5-10, preferably 7-8.

The reinforcing shaft 35 of the turbine blade a1 is installed in the bearing A3 at the vertexes of the polygon of the inner frame A. An L-shaped bent shaft 31 is mounted to the projecting end 32 of the reinforcing shaft 35, with the bent shaft tapering from upper portion to lower portion. One bent shaft 31 is respectively mounted to the two ends of the reinforcing shaft 35 of the turbine blade a1, and is also connected with respective outer frame B. The number of the bent shafts 31 doubles that of the turbine blades a1. Further, both ends of the reinforcing shaft are in three stepped sections decreasing in diameter gradually. The inner section is cylindrical to mount the bearing A3 for connecting the inner frame A. The middle section is a hexagonal prism 33 to mount bent shaft 31, which is used for connecting with the outer frame B, and is provided at its both ends with bent shaft 31 end S having a hexagonal hole, which is used to cooperate with the middle section of the reinforcing shaft 35 of the turbine blade. The outer section 32 is threaded and thus is installed with a nut for locking the bent shaft 31. Each bent shaft 31 together with the connecting end 33 of the center shaft 35 forms an S-shaped curve. The bent shaft 32 has a hexagonal hole for mounting the hexagonal prism middle section 33 of the corresponding reinforcing shaft 35 of the turbine blade. The other end 34 of the bent shaft 33 extends and is fixedly mounted to the vertex of the polygon of the outer frame B.

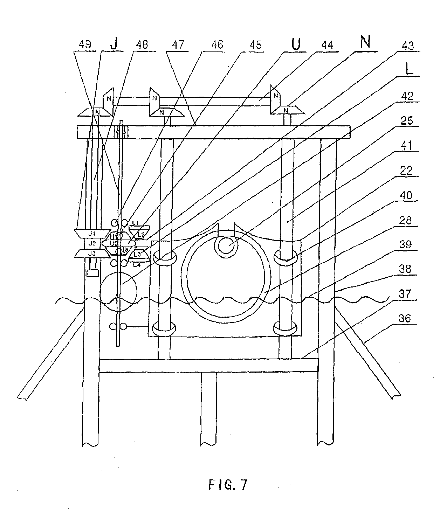

Figure 7 depicts the construction principle of joined posts 38 and various spare parts at one side of a joined post apparatus. The joined post apparatus has two joined posts 38 arranged at two sides of each water turbine 17 respectively, two screw bolts 41 installed between the upper and lower cross beams via bearings, and a reinforcing frame 22 installed at one side of the screw bolt 41. A plurality of nuts 40 are nested on the screw bolt 41, and the reinforcing frame 22 are fixed with the nuts 40 integrally. A recess 24 is provided on the top of the reinforcing frame 22, which recess supports the center shaft 25 of the water turbine via a bearing. In positions corresponding to the inner periphery of the circular rail 28 a plurality of pulleys are installed with a certain interval between each other, and the circular rail 28 of the outer frame B is rotatably supported by a circular groove located at the outer periphery of these pulleys 27. The joined post apparatus further comprises a clutch gear train U, a floating ball 42 coaxial with the clutch gear train U, a bevel gear train J and gear trains L1-L4. The bevel gear train J is mounted to a splined shaft 48 in such a way that the top surfaces of two bevel gears face with other and a spur gear J2 is sandwiched between them. Through the splined shaft 48, the bevel gear train J is connected with the bevel gear train N mounted on the cross beam 47. The floating ball 43 ascends or descends with the water level, so that the clutch gear train U is engaged with corresponding gears in the bevel gear train J and the gear trains L1-L4 to drive two screw bolts 41 to rotate, thus achieving the automatic ascending and descending of the reinforcing frame 22 with the water level.

The distance between two joined posts 38 is preferably 4/3~8/3 times of the diameter of the circular rail 28. Other reinforcing posts or inclined struts 36 may be arbitrarily employed depending on the impact force of flowing water. The materials of the upper cross beam 47 and lower cross beam 37 may be chosen freely, and the screw bolt 41 is made of extra-thick hollow pipe. A spur gear L1 and a bevel gear L2 forms a gear train at the upper side, and a spur gear L4 and a bevel gear L3 forms a gear train at the lower side. The distance between these two gear trains is equal to the thickness of one gear train L, and two layers, namely an upper layer and a lower layer, of spring colliding balls 43 for limit are positioned between these two gear trains. It is preferable that about the clutch gear train U each layer is provided with four colliding balls 43, controlling the engagement between the gear train U integral with the float ball shaft 49 and these two gear trains. The gear train U is mounted via a center mounting bearing 45 to the floating ball shaft 49 in such a way that the bottom surfaces of two bevel gears U1 and U3 face with other and a spur gear U2 is sandwiched between them. The floating ball 42 floats at the water level 39, and ascends or descends with the rising or falling of the water level 39. The lower end of the floating shaft 49 is fitted at the end of channel steel on the plate-typed reinforcing frame 22. The floating ball shaft 49 is supported by six pulleys 46 (the number of pulleys may be determined arbitrarily), which are distributed at three locations with three at left and three at right so that the floating ball shaft 49 is clamped between them. When the water level 39 rises or falls, the water displacement of the floating ball varies with it, resulting in that the floating ball shaft 49 ascends or descends to engage the gear train L with the bevel gear train J against the spring force of the colliding ball 43, and make them to rotate. A simple installation method for the bevel gear train J is as follows: using two hollow circular plates with a annular groove at their surfaces to shut and accommodate balls from the upper and lower sides of the large surface of the bevel gear train J, using screws to insert the hollow circular plates and lock them, and mounting them at projecting channel steel of the plate-typed fastening frame 22. Such a structure is similar to a surface bearing, which allows the bevel gear train J to rotate flexibly and ascend or descend with the plate-typed hanging frame 22.

In the present embodiment, it is preferable that 75% of the displacement buoyancy of the floating ball 42 is equivalent to 35% of the spring force of the colliding balls 43. The process that the water turbine ascends or descends with the water level 39 automatically is as follows. When the water level 39 arises, the floating ball shaft 49 ascends with the water level 39. Thus the bevel gear U1 of the gear train U engages the gear train L' consisted by gears L1 and L 2 with the bevel gear J1 against the spring force of the colliding balls 43, and the engaged gears are connected to the bevel gear train N mounted on the upper cross beam 47 through the splined shaft 48, so as to drive two screw bolts 41 to rotate clockwise, thus achieving the effect that the reinforcing frame 22 ascends with the arising water level 39 to drive the water turbine to ascend. When the water level 39 falls, the floating ball shaft 49 descends with the water level 39. Thus the bevel gear U3 of the gear train U engages the gear train L consisted by gears L3 and L 4 with the bevel gear J3 against the spring force of the colliding ball 43, and the engaged gears are connected to the bevel gear train N mounted on the upper cross beam 47 through the splined shaft 48, so as to drive two screw bolts 41 to rotate counterclockwise, thus achieving the effect that the reinforcing frame 22 descends with the falling water level 39 to drive the water turbine to descend.

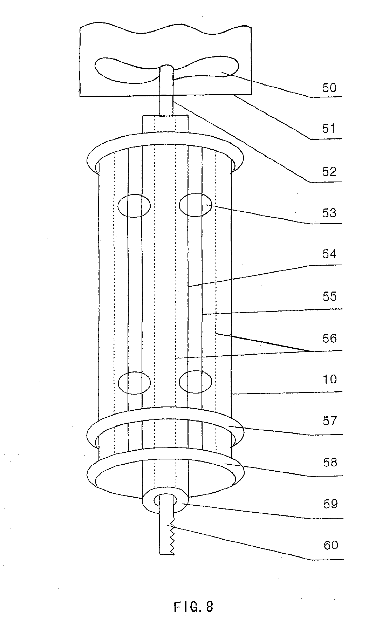

Figure 8 depicts the shift 10 in figure 1. The shift has a center shaft 54 and a housing 55. The shaft 54 is combined with the periphery of the housing 55, and each of them is provided with vertical grooves 56 for shutting and accommodating a plurality of balls 53, which are separated from each other and preferably 4 in number. The size of grooves 56 is the same as the length of the gear rack 60. The distance between the balls may be calculated according to the combination of the number of the transmission cabin t3 of the transmission 7 and the moving frequency of the gear rack 60. The lifting range of the center shaft 54 is associated with the positions of the respective balls 53.

Two ends of the housing 55 of the shift 10 are respectively provided with a bearing 57 fixed thereon, and the lower portion of the housing 55 is provided with a belt wheel 58 to drive the speed-up gear train 13. A bearing 59 is installed on the lower end of the center shaft 54, and the center of the bearing 59 is connected with a sawtooth-shaped gear rack 60. The upper end of the shaft 54 is connected with fan blades 50 with a housing 51 and a shaft 52. The number of the fan blades 50 is preferably 2~4, or may be selected depending on the specific design. The fan blades 50 are set to be slant, and rotate in different manners to drive the gear rack 60 to ascend or descend, thus controlling the transmission 7 to speed up or speed down.

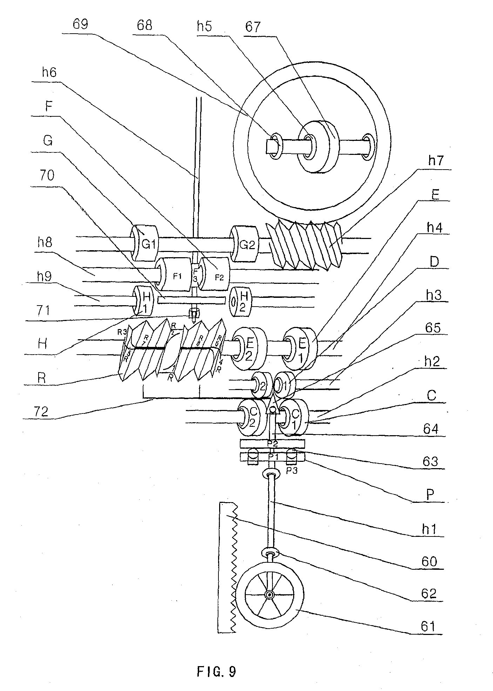

Figure 9 depicts the clutch assembly 9 for engaging the transmission so as to shift it. The clutch assembly 9 comprises an upper ring gear 61 engaged with the gear rack 60, a middle transmitting member and a lower worm h7. Through a series of combined mechanical structures, the clutch assembly 9 automatically selects an appropriate transmission cabin t3 to engage and thus to complete gear shift. The middle transmitting member is mainly composed of a guide disc P connected with the upper ring gear 61, and a transmitting gear train which is able to selectively engaged with the lower worm h7. In the guide disc P there are provided with pressure-limiting spring colliding balls P3, which guide the transmitting gear train E to disengage from the lower worm h7 when the rotation power exceeds its threshold for pressure limiting, so as to automatically shift through mechanical transmission.

Below a brief introduction of the structure and principle of the middle transmitting mechanism will be made.

A rod shaft h1 is installed at the center of the ring gear 61 engaged with the gear rack 60, and the rod shaft h1 extends outward with two bearings 62 supporting at two locations in its middle part. The projecting end of the rod shaft h1 is mounted with a guide disc P, which is composed of two upper and lower disc pates P1 and P2. The upper disc plate P1 is integral with the rod shaft h1 and has 6~8 apertures in its surface for accommodating spring colliding balls 63, whose tension force is adjustable. The colliding balls 63 may be fitted with respect to the ball recesses of the lower disc plate P2. A bearing is mounted at the center of the lower disc plate P2, and is connected with a hollow pipe 64, which is integrally connected with a swing button 65 in flat plate cone shape. The end of the rod shaft h1 is provided with a bearing and is locked by a nut. Thus the swing button 65 may swing leftward and rightward when driven by the ring gear 61, and thus drive the gear D1 or D2 to engage with the gear C and the gear E. The engagement is determined by the threshold for pressure limiting of the colliding balls 63. The colliding balls 63 contained in the guide disc P will displace from the recesses once exceeding the threshold, or similarly the colliding balls 63 displace from the recesses when the sliding bar h6 returns its neutral position.

The transmitting gear train of the clutch assembly 9 comprises four components, which are respectively indicated as gear trains C, D, E and a worm R with a sliding groove. In figure 9 corresponding to the present embodiment, it shows that the gear train C comprises gears C1 and C2, the gear train D comprises gears D1 and D2, and the gear train E comprises gears E1 and E2. However, the gear trains C, D and E may be provided with more than two gears respectively as needed. At the center of the gear train C is provided with a bearing which is positioned on a mounting shaft h2. The gears C1 and C2 rotate in opposite directions, and the rotating power transmitted from the gear train 13 drives the respective gears C1 and C2 to rotate constantly, so that they may transmit the kinetic energy generated by the electric motor d3 to the gear train C and the shaft h5 of the gear (main gear) 67 respectively when the voltage is high, as indicated in figure 1. The gear train C engages with the gear E1 or E2 via the gear train D, causing the worm R with a sliding groove to rotate in the forward or reversed direction, and thus achieving the gear shift. At the center of the gears D1 and D2 there is provided with a splined hole respectively in which colliding balls are arranged, and the colliding balls are also fitted into the recesses of the splined shaft h3 with bearings at two sides. When the swing button 65 swing leftward or rightward to push and engage with the gear D1 or D2 of the gear train D, the colliding balls are pressed into the recesses so as to position the gear and engage it with the gear C, thus transmitting rotating power to the gear E and causing the worm R with sliding groove to rotate in the forward or reversed direction. A sliding button 71 slides with the worm with sliding groove. The gears E1 and E2 as well as the worm R with sliding groove are mounted on the same shaft h4, two ends of which are supported at the surface of the frames via bearings. A bearing may be mounted at one end of the sliding bar h6 which is vertical to the direction of the shaft h4, a circular pipe is provided with a notch for clamping the outer periphery of the bearing, and a shell is nested onto them, thus forming the sliding button 71 which is movable in the sliding groove flexibly. Since the thread of the sliding groove may be triangular or rectangular, the periphery of the sliding button 71 may mate with the thread after it has been selected. The length of the sliding groove may be determined according to the rotating power transmitted by the transmission 7 together with the position relationship from one transmission cabin to another transmission cabin t3. The sliding button 71 has two types of positions, one type for entrance port R1 or R2 at middle of the sliding groove and another type for reversing port R3 or R4.

The transmitting gear train of the clutch assembly 9 further comprises three components indicated as H, F, G and the worm h7. In figure 9 corresponding to the present embodiment, it shows that the gear train H comprises gears H1 and H2, the gear train F comprises gears F1 and F2, and the gear train G comprises gears G1 and G2. However, the gear trains H, F and G may be provided with more than two gears respectively as needed. At the centers of the gears H1 and H2 there is provided with a bearing respectively, which are both mounted on the same shaft h9. The gears H1 and H2 rotate in opposite directions, and the rotating power transmitted from the gear train 13 drives them to rotate, so that they may transmit the kinetic energy generated by the electric motor d3 to the gear H1 or H2 respectively when the voltage is high, as indicated in figure 1. The gear train F is mounted on the sliding rod h6 and are arranged between the gear train H and G. During the swinging with the slide rod h6, the gear F1 or F2 may engage the corresponding one of the gear H1 or H2 with the corresponding one of the gear G1 or G2, so that the worm h7 may rotate to shift. The movement of the gear F1 or F2 depends on the swinging of the sliding button 71 of the sliding rod h6 in the sliding groove. The sliding rod h6 is fixed in the frame of the transmission 7, and its extending end is welded to the projecting periphery of an elliptical ring F3 sandwiched between the gears F1 and F2. The end is further welded with a column shaft and the projecting end is mounted with the sliding button 71. The column shaft is provided with an upper and a lower limit plates 70, so that the sliding rod h6 will not deviate upward or downward during sliding. The sliding button 71 slides with the rotation of the worm R. When it starts sliding at the entrance port R1 or R2 in the middle of the sliding groove, it may cause the rotating power of the gear H to transmit to the gear G. When the sliding button 71 slides and swings to the port R3 or R4 of the sliding groove, the sliding button 71 may reverse its sliding with the turn R5 or R6 of the groove, and tends to rebound back to the middle port R1 or R2 via straight groove R7 or R8. During the process the sliding button 71 will contact a switch button 72 associated with the gear D, so that the gear D will disengage from the gear C and return its neutral position at the same time. The gear F will synchronously disengage and the main gear 67 will also disengage from the transmission cabin t3. These actions are associated with the sliding rod h6 returning to the neutral position. The splined hole of gear F is nested on the splined shaft h8, and two ends of the shaft h8 are provided with bearings for mounting the shaft.

On the splined shaft h8, the gear F is pushed by the sliding rod h6 to engage with the gear H1 or H2, and transmit the rotating power to the gear G1 or G2. The gear G1 or G2 rotates to cause the coaxial worm h7 to engage with the annular worm wheel 69, so that the transmission cabins t3 rotate clockwise or counterclockwise. The worm wheel 69 has main frame plates t2 integral with the respective transmission cabins of the transmission 7. Thus the worm wheel 69 starts to move the gears of the first transmission cabin t3, and the rotating power of the main gear 67 forces the transmission cabin t3 to make gear shift. The shaft h5 of the main gear 67 at the center of the annular worm wheel 69 are mounted via bearings 68 at its two ends. The rotating force of the main gear 67 from the gear train 12 drives the main gear 67 to rotate constantly. The annular worm wheel 69 is moved to the corresponding transmission cabin t3 as needed, so as to change the speed transmitted by the main gear 67. Thus when the first transmission cabin t3 of the transmission cabins t3 is engaged with the main gear 67, the teeth of the main gear 67 are engaged with the top gear of the first transmission cabin of the transmission 7.

As is clear in connection with figure 1 and figure 9, when the voltage is high, the gear rack 60 of the shift 10 is moved, and thus causes various parts of the clutch assembly 9 to selectively engage with each other, so as to transmit the rotating power to the worm h7. The worm h7 accordingly rotates the annular worm wheel 69 of the transmission 7 to cause it to rotate clockwise or counterclockwise, and in turn causes the top gear of the respective transmission cabin t3 to rotate continuously, until the target transmission cabin t3 engages with the main gear 67. When the voltage is low, the various parts of the clutch assembly 9 cannot transmit the rotating power to the worm h7, and thus the transmission cabin t3 returns to its original position and cannot engage with the main gear 67. The energy transmission is thus terminated.

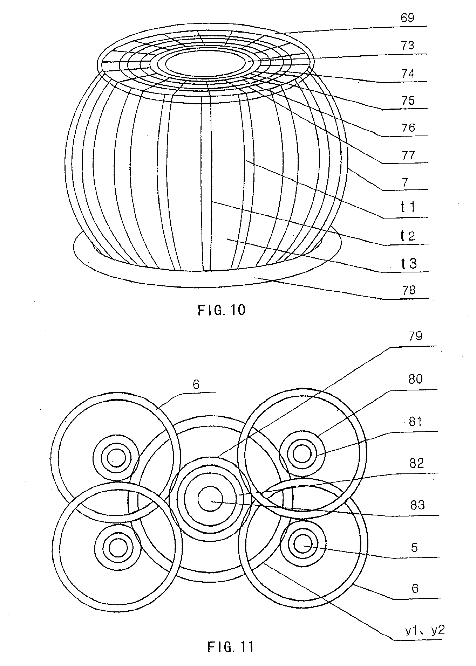

Figure 10 depicts the transmission 7, which is in spherical shape and comprises a top annular worm wheel 69, a center shaft 73 interlocked with the worm wheel 69, and main frame plates t2 as well as auxiliary plates t1 both of which are used to separate respective transmission cabins t3 from each other. The main frame plates t2 are fixedly connected with the top annular worm wheel 69. A plurality of gears in the same vertical plane are installed in each transmission cabin t3 from top to bottom with one gear engaged with another sequentially. Depending on the sequence that respective transmission cabin t3 are arranged, the speed transmitted by the transmission 7 increase from the cabin at intermediate position to left and decrease from the cabin at intermediate position to right. The transmission 7 must calculate its configuration specification and arrange the number and positions of the transmission cabins t3.

The transmission 7 has a circular pipe as its center mounting shaft 73, which is welded with two annular plate 76 near its two ends. At the outer surface of the plate 76, there is provided with a ball channel 75 for fitting balls, and a broader annular plate 77 also with ball channel covers the ball channel 75. Screws are inserted through the holes in the surface of the broader annular plate 77 to fix the plate. A four-legged mount 74, an upper main gear and a lower main gear are fitted to the transmission. These two main gears 67 are mounted so that they may selectively engage the top gear and bottom gear in the respective transmission cabin t3. The upper main gear 67 is slightly thicker than the lower main gear. When assembling the transmission cabins t3, various gears in each transmission cabin t3 are connected with shafts serially and they are installed in the main frame plates t2, and the auxiliary plates t1 are attached to form independent transmission cabins t3. Screws are used to fix the main frame plate 2 to the broader annular plate 77, and ultimately a four-legged mount disc 78 is installed.

In the present embodiment, the gear shift process of the respective transmission cabins t3 of the transmission 7 is as follows. The upper main gear 67 is rotated when driven by the gear train 12, and the clutch assembly 9 is engaged with the top annular worm wheel 69 through the worm h7. According to the voltage, the upper main gear 67 may selectively engage a proper transmission cabin t3, and the lower main gear may further engage the bottom gear of the corresponding transmission cabin t3 to output kinetic energy. In the present embodiment, the speed increasing ratio/speed decreasing ratio of the respective transmission cabins t3 of the transmission 7 is change in decrement, and may be set depending on the practical conditions. For example, an intermediate transmission cabin t3 has a speed ratio of 1.5, and it is determined that if changing to engage a left transmission cabin t3 the speed will increase with the speed ratio decreasing 0.03, and if changing to engage a right transmission cabin t3 the speed will decrease with the speed ratio decreasing 0.02. That is, the first transmission cabin at the left of the intermediate transmission cabin t3 will increase the speed by 1.47 times, the second transmission cabin at the left will increase the speed by 1.44 times, and analogically the speed will increase with the speed ratio decreasing 0.03 each time changing to the next transmission cabin at the left. The first transmission cabin at the right of the intermediate transmission cabin t3 will decrease the speed by 1.48 times, the second transmission cabin at the right will decrease the speed by 1.46 times, and analogically the speed will decrease with the speed ratio decreasing 0.02 each time changing to the next transmission cabin at the right.

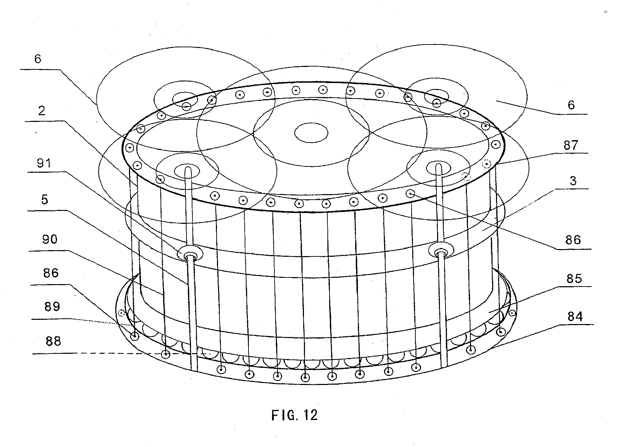

Figure 11 depicts transmitting gear train synchronously rotating. The transmitting gear train comprises two sets of gears, one set for storing rotating power and another set for outputting rotating power. Both of the two sets gears are arranged at the surface of the energy storage bank 2 for assisting storing and outputting rotating energy. The transmitting gear set is composed of a large gear y1, a small gear 79 interlocked with center shaft 83 of the large gear y1, and four spur gears 6 engaged with the small gear 79. The spur gears 6 have outer shafts 5, and small gears 91 are mounted at the middle part of the outer shafts for engaging gears 3 arranged at the outer periphery of the energy storage bank 2, thus inputting the rotating power into the energy storage bank 2 and converting it into potential energy therein. The transmitting gear train further comprises a large gear y2 interlocked with the center shaft 83 of the large gear y1, and small gears 80 interlocked with the outer shafts 5 of the spur gears 6, for outputting the energy from the energy storage bank 2. One single transmitting gear train may be used to store and output rotating power, or two transmitting gear trains may be connected with each other to assisting to store and output rotating power respectively. The transmitting gear train may comprise multiple layers of engaged large or small gears after the assembling of the gear train, and all the gears are mounted on five vertical column shafts respectively. These five shafts include the outer shafts 5 and the center shafts 83.

The lower main gear of the transmission 7 engages the gear of the worm and the worm engages the worm wheel in turn, and the gear in the worm-wheel shaft engages with the storing large gear y1 at the surface of the energy storage bank. The center shaft hub 82 of the large gear y1 is interlocked with the small gear 79, and bearings 81 are respectively set in both sides of the shaft hub 82. The holes of the bearings 81 are nested on the center shaft 83 of the energy storage bank 2, and by means of the bearings the center shaft 83 will not rotate while the center of the gears rotates. The integrated small gear 79 engages the spur gears 6, and the gears 91 at the middle part of the outer shafts 5 of the transmitting gear train engage the hollow gear 3, so as to input the kinetic power into the energy storage bank 2.

The potential energy in the energy storage bank 2 is released as kinetic power, and the kinetic power from the energy storage bank 2 is transmitted to the small gears 80 interlocked with spur gears 6 through the integrated large gear y2, which is coaxial with the large gear y1, at the upper end of the center shaft 83. By means of the bearings the outer shaft 5 will not rotate while the center of the gears rotates. The spur gears 4 engage the small gear 79, the small gear 79 may engage the large gear y2, and further the small gear engage the gear train 11 to output rotating power, thus controlling, by an "regulation and control device", the kinetic power supply to the generators for generating electricity.

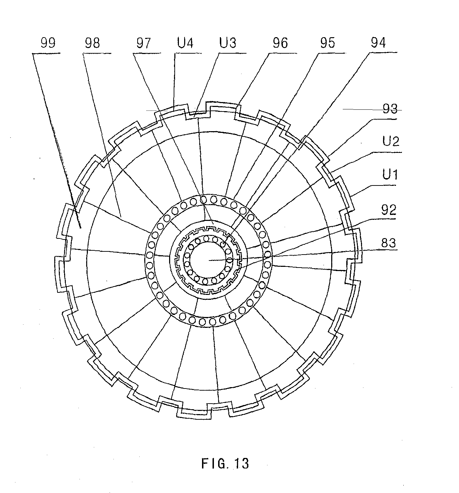

Figure 12 depicts the structure of the housing 93 of the energy storage bank 2. The housing 93 is cylindrical as a whole. A broadened annular plate 85 is welded on the upper and lower surfaces of the housing 93 respectively, and an additional cover is installed on the reinforced surface plate. A lower cover 84 utilizes channel steel as its frame and is additionally attached with a broadened disc plate. An upper cover 87 may simply utilize common rods as its frame, and the frame is welded inside the broadened and further covered by a disc plate. The housing 93 is made from plastic steel plate, and at the periphery of the cylinder vertical projections U1 and recesses U2 are formed (see figure 13), constructing a splined hollow cylinder. On the surfaces of the broadened annular plates 85 of the upper cover and the lower cover, there are provided with channels 89 for balls 88, thus facilitating the housing 93 of the energy storage bank 2 to rotate on the reinforced flat plate.

There are four outer shafts 5 of the energy storage bank 2, which are installed in parallel with the center shaft 83. When mounting the outer shafts 5, each of them is mounted with a conical roller bearing 94 at its lower end, is mounted with a gear 91 at its middle part to engage the hollow gear 3 arranged at the middle part of the periphery of the cylinder, and is mounted with the transmitting gear train at its upper end.

The gear train 11 for transmitting the output energy from the energy storage bank 2 and the gear train 12 for transmitting the input energy into the energy storage bank 2 are provided with a switch respectively. The switches are used to control the amount of input and output energy in an on-off manner. The switches are connected with a display panel for power storage and the voltage-limiting distributor d5. When the switch provided in the gear train 12 is open, no energy can be input into the energy storage bank 2; when the switch is closed, it is electrically connected with the electric motor d3 and initiates power supply into the energy storage bank 2. When the switch provided in the gear train 11 is open, the energy storage bank 2 stops releasing energy, and when the switch is closed, the energy storage bank 2 releases excessive energy and connects generators to generate electricity and supply it to the regulation and output device d7.

Figure 13 depicts an annular disc 96 arranged in the energy storage bank 2. The respective layers of the annular disc 96 are independent from each other. The annular disc 96 employs plastic steel material with a width being 8/5 of the width of the leaf spring. Its outer periphery is provided with vertical projections U3 and recesses U4, the sizes of which mate with those of the projections U1 and recesses U2 in the housing 93 of the energy storage bank. The number of the recesses U4 is equal to that of the leaf springs. The upper surface of the annular disc 96 is covered by welding a circular plate 99, and the bottom surface of the annular disc 96 is also covered by welding a circular plate. At the center of the bottom plate of the annular disc 96 there is a hole, into which the splined hub 97 of the center shaft 83 may be inserted. It is needed to weld reinforcing rods 98 within the bottom of the annular disc 96. Backup plate 98 are mounted on the surface of the reinforcing rods, and stiffness of the backup plate should be at least twice as hard as the leaf springs for adapting to the sliding of the leaf springs. A reinforcing frame is mounted on the bottom of the energy storage bank 2, and a conical roller bearing 94 is installed at the center of the reinforcing frame. Below the center of the bearing 94, a thrust bearing or balls are installed to enhance the wear resistance of the center shaft 83. At the outer periphery of the conical bearing 94, two circular plates 95 are provided with ball sliding channels respectively to fit and lock balls, thus forming a ball ring 95 which is installed below each layer of the annular disc 96 in order to facilitate sliding.

The specification and installation of the leaf springs is as below. The number of the leaf springs may be determined according to the area acquired by the product of the thickness and length of the leaf spring as well as the area of the annular disc 96. Since it is needed to keep certain space within the annular disc 96, the ratio of the volume of the annular disc to the volume of the leaf springs is preferably 20:9, so that the active winding turns of the leaf spring cannot be less than 10 turns. The width of the leaf spring may be flexibly selected according to the volume of the energy storage bank 2. When assembling, two ends of the leaf spring are annealed and curved as small cylinders. After the curved portions are fixed by welding, one of the two ends is mounted to one corresponding splined recess U4 at the inner periphery of the annular disc 96, and screws are inserted through the holes in the leaf spring from the holes in the upper annular plate 99, so as to fix the end to the annular disc 96. The other end of the leaf spring is fixed in the splined hub 97. About the splined hole 92 of the splined hub 97, circular plates are welded from two sides, there are holes along the respective peripheries of the circular plates. Screws are inserted through the holes of the circular plate and the holes in the leaf springs. Therefore, two ends of the leaf springs are flexible.

The installation steps for the annular disc 96 with leaf springs are as follows. The splined proections U3 and recesses U4 at the outer periphery of the annular disc are mated with the inner recesses U1 of the housing 93 of the energy storage bank 2. After the annular disc 96 is thus installed into the energy storage bank 2, the center shaft 83 is installed. The splined recesses 92 at the periphery of the center shaft 83 are mated with the splined hub 97 in the annular disc 96, so the center shaft 83 are inserted through the splined recesses 97 in each layer of annular disc 96 from the top down and reaches the hole in the conical bearing 94. Then, the upper cover 87 covers the energy storage bank 2, and screws 90 at the periphery are fastened and nuts 86 are locked. At last, all gears and spare parts are mounted at the surface of the energy storage bank 2.

The present invention further provides a method of hydraulic power generation utilizing the described water turbine generator with vertical turbine blades. The method includes the following steps:
a. The water turbine with multiple turbine blades is driven by flowing water, so that the blades drive the center shaft of the water turbine to rotate in the manner that all the blades are vertical to the horizontal plane;
b. The center shaft of the water turbine is connected with a speed-up gear train and transmits kinetic energy to a generator group via the gear train;
c. The kinetic energy is converted into electric power, thus providing a stable voltage through a voltage regulation and output device.

The present invention further provides a method of hydraulic power generation applying the described water turbine generator with vertical turbine blades to ocean power generation. The method includes the following steps:
a. The water turbine with multiple turbine blades is driven by flowing water, so that the blades drive the center shaft of the water turbine to rotate in the manner that all the blades are vertical to the horizontal plane;
b. The center shaft of the water turbine is connected with a speed-up gear train and transmits kinetic energy to a generator group via the gear train;
c. The kinetic energy is converted into electric power; when the voltage is high, the electric power is converted into kinetic energy by the electric motor, and the kinetic energy is stored into the energy storage bank via the shift, the clutch assembly, the transmission, the transmitting gear train and the drive system; when the ocean power is not stable or the voltage is insufficient, the mechanical energy stored by the energy storage bank is transmitted to the generator group through the transmitting gear train, and is converted into electric power by the generator group; thus providing a stable voltage through a voltage regulation and output device.

The described hydraulic power generation device and method are preferably applied to ocean power generation, and may store or release energy as needed to provide continuous and stable voltage.

## Claims

1. A water turbine generator with vertical turbine blades, comprising
a water turbine (17) with vertical turbine blades, having multiple blades (a1) each of which may rotate synchronously with a center shaft (25) of the water turbine;
posts (20) for fixing the water turbine (17) in water;
speed-up gear train (14) rotating synchronously with the center shaft (25) of the water turbine; and
a generator group (d1), which can realize hydraulic power generation by means of kinetic power transmitted to the generator group (d1) through the speed-up gear train,
which is **characterized in that**,
the multiple blades (a1) are fitted on the water turbine (17) vertically to the horizontal plane, so that the respective blades (a1) are driven by water and kept vertical to the horizontal plane all the time.

2. A water turbine generator with vertical turbine blades according to claim 1, **characterized in that**,
at the middle part of each turbine blade (a1) there is integrally provided with a reinforcing shaft (35) parallel with the center shaft (25);
on the left and right sides of the water turbine (17) there are respectively provided with an inner frame (A) and an outer frame (B), each of which is a polygonal frame having the same number of sides as the number of turbine blades (a1), wherein, the inner frame (A) has multiple connecting arms, each of which is orderly connected to the end of one corresponding reinforcing shaft (35) at the vertex of the polygon, so that the inner frame (A) may rotate about the axis of the center shaft (25);
the outer frame (B) has a circular rail (28) at its center portion, and multiple bent shafts (31), which are provided at the vertexes of the polygon and connected with the ends of corresponding reinforcing shafts (35) of the turbine blades to be integral with the corresponding reinforcing shafts, so that the outer frame (B) may rotate about the center axis of the circular rail (28);
the rotating center axis of the outer frame (B) is located below the rotating center axis of the inner frame (A), and these two rotating center axes are parallel with each other and positioned in the same vertical plane.

3. A water turbine generator with vertical turbine blades according to claim 2, **characterized in that**,
each of the turbine blades (a1) of the water turbine (17) comprises a plurality of sawtooth-shaped units in the shape of strips, which are arranged along the extending direction of the center shaft (25) of the water turbine and form a rectangle as a whole, the adjacent sawtooth-shaped units are fixed to each other through separation plates (a4), and are formed as a pattern that their concave portions and convex portions are alternately arranged along the direction of the center shaft (25) of the water turbine.

4. A water turbine generator with vertical turbine blades according to claim 2, **characterized in that**,
the bent shafts (31) are L-shaped and taper from upper portion to lower portion, each of the bent shafts (31) is respectively mounted to two ends of the reinforcing shaft (35) of the corresponding turbine blade (a1),
both ends of the reinforcing shaft (35) are in three stepped sections decreasing in diameter gradually, the inner section is cylindrical to mount a bearing (A3) for connecting the inner frame, the middle section is a hexagonal prism to mount the bent shaft (31), which is used for connecting with the outer frame and is provided at its both ends with a hexagonal hole for cooperating with the middle section of the reinforcing shaft (35) of the turbine blade, and the outer section is installed with a screw for locking the bent shaft (31), each end of the bent shaft (31) has a hexagonal hole for aligning with the hexagonal prism middle section of the corresponding reinforcing shaft (35) of the turbine blade (a1), so as to be fixed thereon.

5. A water turbine generator with vertical turbine blades according to claim 1, **characterized in that**, one water turbine (17) has 5-10 turbine blades (a1).

6. A water turbine generator with vertical turbine blades according to claim 4, **characterized in that**,
the reinforcing shaft (35) of the turbine blade (a1) is a circular pipe, and along the width direction of the blade, the thickness of the pipe is incremented in steps every unit from the middle part of the reinforcing shaft to its left or right, and
each unit and separation plate (a4) are fixed together by welding.

7. A water turbine generator with vertical turbine blades according to claim 2, **characterized in that**,
the water turbine (17) is provided at its both sides with boat-shaped floating pontoons (1), a plurality of stands (15) for supporting the floating pontoons (1) and reinforcing frames 22 arranged at the side of the floating pontoons (1),
wherein the stands (15) are connected with the posts (20) through fasteners, the boat-shaped floating pontoons (1) are made by welding flat plates, the upper and lower ends of the floating pontoons are wedge-shaped, and the floating pontoons are located at the outside of the outer frame (B);
at the upper portion of the reinforcing frame (22) there is a recess, which supports the center shaft (25) of the water turbine through a bearing; and
in positions corresponding to the inner periphery of the circular rail (28) a plurality of pulleys (27) are installed with a certain interval between each other, and the circular rail (28) of the outer frame (B) is supported by a circular groove located at the outer periphery of these pulleys (27).

8. A water turbine generator with vertical turbine blades according to claim 1, **characterized in that**,
the generator further comprises a joined post apparatus,
at both sides of the water turbine (17) there are respectively provided with a plurality of standing joined posts (38), upper cross beams (47) and lower cross beams (37) connecting the joined posts (38), two screw bolts (41) installed between the upper and lower cross beams via bearings, and a reinforcing frame (22) installed at one side of the screw bolts (41),
wherein, a plurality of nuts (40) are nested on the screw bolts (41), and the reinforcing frame (22) are fixed with the nuts (40) integrally, at the upper portion of the reinforcing frame (22) there is a recess, which supports the center shaft (25) of the water turbine through a bearing, and in positions corresponding to the inner periphery of the circular rail (28) a plurality of pulleys (27) are installed with a certain interval between each other, and the circular rail (28) of the outer frame (B) is supported by a circular groove located at the outer periphery of these pulleys (27).

9. A water turbine generator with vertical turbine blades according to claim 8, **characterized in that**,
the joined post apparatus further comprises a clutch gear train (U), a floating ball (42) coaxial with the clutch gear train (U), a bevel gear train (J) and gear trains (L1-L4),
the bevel gear train (J) is mounted to a single splined shaft (48) in such a way that the top surfaces of two bevel gears face with other and a spur gear (J2) is sandwiched between them, and through the splined shaft (48), the bevel gear train (J) is connected with a bevel gear train (N) mounted on the upper cross beam (47); and
the floating ball (43) ascends or descends with the water level, so that the clutch gear train (U) is engaged with corresponding gears in the bevel gear train (J) and the gear train (L1-L4) to drive two screw bolts (41) to rotate, thus achieving the automatic ascending and descending of the reinforcing frame (22) with the water level.

10. A water turbine generator with vertical turbine blades according to claim 1, **characterized in that**,
the generator is further provided with a shift (10), a clutch assembly (9), a transmission (7), a transmitting gear train and an energy storage bank (2);
wherein, the shift (10) may comprise a gear rack (60), which is movable up and down to determine speed up or speed down; the clutch assembly (9) is used to determine the shifting position of the transmission, and comprises an upper ring gear (61) engaged with the gear rack (60), a middle transmitting member and a lower worm (h7); along its circumferential direction, the transmission (7) is provided with multiple independent transmission cabins (t3), each of which contains multiple gears and is provided with a main gear (67) at its upper portion and lower portion respectively, and these main gears (67) may selectively engage with the top gear and bottom gear within the respective transmission cabin (t3); the transmitting gear train has a large gear (y1) interlocked with the main gear (67) at the lower portion, and multiple spur gears (6) that are disposed along the circumference of the large gear (y) and may transmit power into or out of the energy storage bank (2); the energy storage bank (2) comprises a housing coaxial with the center shaft (83) of the large gear (y1) and leaf springs, one end of each leaf spring is mounted in an annular housing (93) of an annular disc (6) and the other end is fixed to the shaft hub of the center shaft (83) of the large gear (y1), and the leaf spring may wind or unwind about the center shaft (83);
when the voltage is high, part of the electric power is transmitted to the electric motor (d3) and is converted into kinetic energy there, the kinetic energy is transmitted to the shift (10) via the gear train (13), the shift (10) controls the clutch assembly (9) to engage the transmission (7) and select one appropriate corresponding transmission cabin (t3) of the transmission (7) to make gear shift, and the kinetic energy is converted into potential energy via the transmitting gear train and stored into the energy storage bank (2);
when the voltage is low, the potential energy from the energy storage bank (2) is converted into kinetic energy, and the kinetic energy is transmitted to an energy regulation and control device via the center shaft (83) of the energy storage bank (2), the output gear train (4) and the gear train (11), and ultimately is transmitted to the electric generator and converted into electric power there, and the electric power is supplied to an electric regulation and output device (d7) to achieve a stable voltage output.

11. A water turbine generator with vertical turbine blades according to claim 10, **characterized in that**,
the middle transmitting member is provided with a guide disc (P) connected with the upper ring gear (61), and a transmitting gear train (E) which is able to selectively engaged with the lower worm (h7); in the guide disc (P) there are provided with pressure-limiting spring colliding balls (P3), which guide the transmitting gear train (E) to disengage from the lower worm (h7) when the rotation power exceeds its threshold for pressure limiting, so as to automatically shift through mechanical transmission.

12. A water turbine generator with vertical turbine blades according to claim 10, **characterized in that**,
the transmission (7) is in spherical shape and comprises a top annular worm wheel (69), a plurality of transmission cabins (t3), a center shaft (73) interlocked with the worm wheel (69), and main frame plates (t2) as well as auxiliary frame plates (t1) both of which are used to separate respective transmission cabins (t3) from each other, the main frame plates (t2) are fixedly connected with the top annular worm wheel (69), and a plurality of gears in the same vertical plane and engaged with each other are installed in each transmission cabin (t3) from top to bottom sequentially.

13. A water turbine generator with vertical turbine blades according to claim 10, **characterized in that**,
depending on the sequence that respective transmission cabin (t3) are arranged, the speed transmitted by the transmission (7) increase in steps from the cabin at intermediate position to left and decrease in steps from the cabin at intermediate position to right.

14. A water turbine generator with vertical turbine blades according to claim 10, **characterized in that**,
the transmitting gear train is composed of a large gear (y1), a small gear (79) interlocked with the center shaft (83) of the large gear (y2), and four spur gears (6) engaged with the small gear (79), wherein the spur gears (6) have outer shafts (5), and small gears (91) are mounted at the middle part of the outer shafts for engaging gears (3) arranged at the outer periphery of the energy storage bank (2), thus inputting the rotating power into the energy storage bank (2) and converting it into potential energy therein; the transmitting gear train further comprises a large gear (y2) interlocked with the center shaft (83) of the large gear (y1), and gears (80) interlocked with the outer shafts (5) of the spur gears (6), for outputting the energy from the energy storage bank (2).

15. A water turbine generator with vertical turbine blades according to claim 10, **characterized in that**,
the energy storage bank (2) further comprises a housing (93), an upper and a lower cover plates (87) and multiple layers of annular discs (96), wherein a plurality of splined hubs (97) are fitted on the center shaft (83), splined grooves (U1, U2) are formed at the periphery of the housing (93), projections and recesses (U3,U4) being able to mate with the splined grooves (U1, U2) are provided along the periphery of the annular discs (96), an embedding circular plate (99) is mounted at the bottom annular surface of each layer of annular discs (96), the leaf springs are installed in each layer of the annular discs (96), one end of each leaf spring is mounted in the inner recess (U4) of the annular discs (96), the other end is fixed to the splined hub (97), at the lower side of the upper cover plate (87) and the upper side of the lower cover plate (84) there is respectively provided with an annular channel (89) for containing balls (88), at the upper and lower surfaces of the annular channels there are respectively provided with annular plates (85) for locking the balls (88), and when the housing (93) and the annular disc (96) as well as the center shaft (83) rotate integrally, the leaf springs wind or unwind about the center shaft (83).

16. A combined generator, comprising more than two water turbine generators with vertical turbine blades according to any one of the claims 1-15, these water turbine generator may be combined to generate electricity integrally.

17. A method of hydraulic power generation utilizing the water turbine generator with vertical turbine blades according to any one of the claims 1-9, comprising the following steps:
a. the water turbine(17) with multiple turbine blades(a1) is driven by flowing water, so that the blades(a1) drive the center shaft(25) of the water turbine to rotate in such a manner that all the blades are vertical to the horizontal plane;
b. the center shaft (25) of the water turbine is connected with the speed-up gear train and transmits kinetic energy to a generator group(d1) via the gear train;
c. the kinetic energy is converted into electric power by the generator group(d1), thus providing a continuous and stable voltage through a voltage regulation and output device.

18. A method of hydraulic power generation according to claim 17, **characterized in that**, more than two water turbine generators with vertical turbine blades are combined to generate electricity.

19. A method of hydraulic power generation applying the water turbine generator with vertical turbine blades according to any one of claims 10-16 to ocean power generation, the method comprising the following steps:
a. the water turbine(17) with multiple turbine blades(a1) is driven by flowing water, so that the blades(a1) drive the center shaft(25) of the water turbine to rotate in such a manner that all the blades are vertical to the horizontal plane;
b. the center shaft (25) of the water turbine is connected with the speed-up gear train and transmits kinetic energy to a generator group (d1) via the gear train;
c. the kinetic energy is converted into electric power by the generator group(d1); when the voltage is high, the electric power is converted into kinetic energy by the electric motor(d3), and the kinetic energy is stored into the energy storage bank(2) via the shift(10), the clutch assembly(9), the transmission(7), the transmitting gear train and the drive system; when the ocean power is not stable or the voltage is insufficient, the mechanical energy stored by the energy storage bank(2) is transmitted to the generator group(d1) through the transmitting gear train, and is converted into electric power by the generator group(d1); thus providing a stable voltage through a voltage regulation and output device(d7).

20. A method of hydraulic power generation according to claim 19, **characterized in that**, more than two water turbine generators with vertical turbine blades are combined to generate electricity.
